# FASCICULE DE BREVET EUROPEEN

(11) **EP 2 374 270 B1**
(45) Date de publication et mention de la délivrance du brevet: **16.01.2013**
(21) Numéro de dépôt: 09805739.1
(22) Date de dépôt: 17.12.2009
(51) Int. Cl.: H04N 5/232

(54) **SYSTÈME DE CAPTURE D'IMAGES ET UTILISATION ASSOCIÉE POUR AMÉLIORER LA QUALITÉ DES IMAGES ACQUISES**
SYSTEM ZUM ERFASSEN VON BILDERN UND DIESBEZÜGLICHER GEBRAUCH ZUM VERBESSERN DER QUALITÄT DER BESCHAFFTEN BILDER
SYSTEM FOR CAPTURING IMAGES AND RELATED USE FOR IMPROVING THE QUALITY OF THE IMAGES ACQUIRED

(30) Priorité: 06.01.2009 FR 0950055
(43) Date de publication de la demande: 12.10.2011
(73) Titulaire: DxO Labs, 92100 Boulogne Billancourt (FR)
(72) Inventeur: PYANET, Marine, F-75015 Paris (FR); DOUADY, César, F-91400 Orsay (FR); GUICHARD, Frédéric, F-75012 Paris (FR); NGUYEN, Hoang-Phi, F-75013 Paris (FR); LIEGE, Bruno, F-92100 Boulogne (FR)
(74) Mandataire: Cabinet Plasseraud
(86) Numéro de dépôt international: PCT/FR2009/052604
(87) Numéro de publication internationale: WO 2010/079279

(56) Documents cités:
- WO-A-2006/098955
- JP-A- 2009 069 197
- US-A1- 2006 198 624

## Description

La présente invention concerne un système de capture d'images.

Un tel système de capture d'images (fixes ou animées selon les cas) peut par exemple être un module apte à être utilisé dans un appareil photo numérique, un appareil reflex, un scanner, un fax, un endoscope, une caméra, un caméscope, une caméra de surveillance, un jouet, une caméra, un appareil photo intégré ou relié à un téléphone, à un assistant personnel ou à un ordinateur, une caméra thermique, un appareil d'échographie, un appareil d'imagerie IRM (résonance magnétique), un appareil de radiographie à rayons X, etc.

Il comprend classiquement un capteur incluant une pluralité d'éléments photosensibles (par exemple des pixels) qui transforme une quantité de lumière reçue en valeurs numériques, et un système optique comprenant une ou plusieurs lentilles pour focaliser la lumière vers le capteur.

Le capteur peut être par exemple un détecteur à transfert de charge CCD (Charged Coupled Device), un CMOS (Complementary Metal Oxyde Semiconductor), un CID (Charge Induced Device), un IRCCD (Infra-Red CCD), un ICCD (Intensified CCD), un EBCCD (Electron Bombarded CCD), un MIS (Metal Insulator Semiconductor), un APS (Active Pixel Sensor), un QWIP (Quantum Well Infrared Photodetectors), un MPQ (Multi-Puits Quantiques), ou autre. Il peut éventuellement être associé à un filtre par exemple de Bayer ou encore panchromatique afin d'obtenir une image couleur.

La lumière reçue sur chaque élément photosensible du capteur n'est pas nécessairement intégrée simultanément. Par exemple, dans un appareil photographique numérique, la lumière peut être reçue selon un balayage par lignes successives d'éléments photosensibles du capteur, les lignes étant selon la plus grande dimension du capteur. Un tel balayage est obtenu à l'aide d'un obturateur à balayage électronique (« Electronic Rolling Shutter » ou ERS, en anglais).

Du fait de ce balayage, chaque ligne d'éléments photosensibles du capteur reçoit une information de la scène à capturer pendant le même temps d'exposition, mais l'exposition démarre à un instant différent pour chaque ligne.

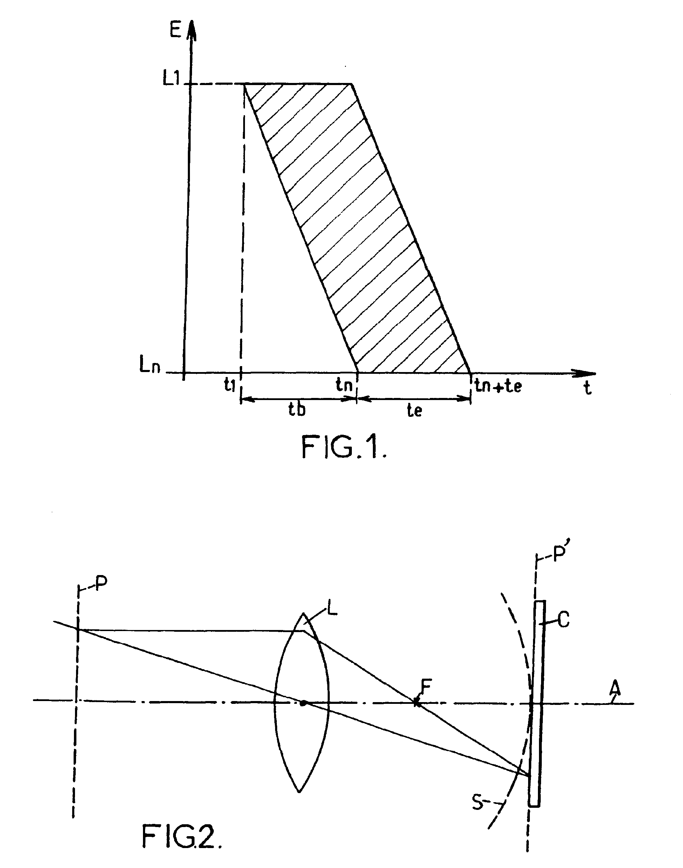

Ce phénomène est illustré sur la figure 1, laquelle donne une représentation de l'exposition E des n lignes, L1 à Ln, d'éléments photosensibles du capteur au cours du temps t.

L'obturateur à balayage électronique expose à la lumière la première ligne L1 du capteur en premier, à partir de l'instant t1. Cette ligne L1 reste ensuite exposée à la lumière pendant un temps d'exposition te, c'est-à-dire jusqu'à l'instant t1 +te.

L'obturateur à balayage électronique démarre l'exposition de la deuxième ligne du capteur après la première, et ainsi de suite jusqu'à la dernière ligne Ln du capteur.

La dernière ligne Ln est ainsi exposée à la lumière entre les instants tn et tn+te.

Le temps de balayage tb de la première à la dernière ligne du capteur peut donc être défini comme tn-t1.

Au total, des lignes du capteur sont exposées à la lumière entre l'instant t1 et l'instant tn+te, c'est-à-dire sur une durée globale de tn+te-t1.

Une ligne donnée n'est d'ailleurs pas nécessairement entièrement exposée à la lumière à un instant donné. Au contraire, l'exposition à la lumière peut démarrer à des instants successifs pour les différents éléments photosensibles composant cette ligne.

Du fait de l'obturateur à balayage électronique, seule une partie du capteur peut ainsi être exposée à la lumière à un instant donné. Cette partie évolue dans le temps et elle est d'autant plus grande que le temps d'exposition (ou temps de pose) divisé par le temps de balayage est grand.

De par son mode de fonctionnement, l'obturateur à balayage électronique permet d'éviter l'utilisation d'un obturateur mécanique et donc de réduire le coût, tout en permettant d'effectuer un traitement numérique au fur et à mesure de la capture d'image, ce qui peut éventuellement compenser l'absence d'une mémoire suffisante pour stocker la totalité des données issues de la capture.

Il peut cependant donner lieu à des phénomènes indésirables, telle une déformation de l'image d'un objet en mouvement rapide lors de la capture.

De manière plus générale selon l'invention, on appelle obturateur à balayage électronique (ERS) tout dispositif permettant d'exposer à la lumière les éléments photosensibles du capteur à des instants dépendants de leur position respectives au sein du capteur. Le balayage peur être par ligne, par colonne mais également selon un autre schéma par exemple du bord vers le centre ou inversement ou tout autre schéma. Le balayage peut être effectué en agissant sur l'électronique de contrôle des éléments photosensibles mais également à l'aide d'un dispositif optique masquant une partie des éléments photosensibles ou tout autre moyen.

Par ailleurs, la qualité des images obtenues est un critère majeur dans l'évaluation d'un système de capture d'images, que l'on cherche constamment à améliorer par des actions diverses qui vont de la conception du système optique à l'optimisation des algorithmes de traitement numérique mis en oeuvre sur les images capturées.

A titre d'exemples non limitatifs de phénomènes susceptibles de dégrader la qualité des images, on peut citer les défauts de focalisation et la mauvaise exposition de l'image.

Un défaut de focalisation classique est la courbure de champ. Ce phénomène, schématisé sur la figure 2, fait que l'image d'un plan P par un système optique L ne se forme généralement pas sur un plan P' conjugué de P par l'optique L, mais sur une surface courbe S. Cette surface S est par exemple sphérique et a l'axe optique A comme axe de révolution.

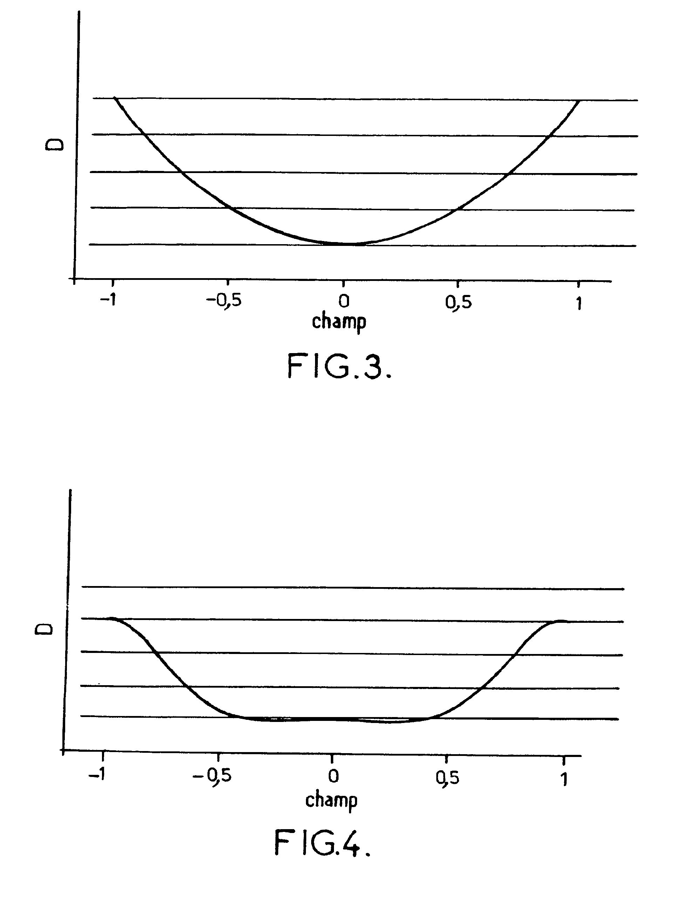

La figure 3 illustre un exemple d'écart D entre le point de focalisation réel des rayons et le plan image P' (c'est-à-dire le plan perpendiculaire à l'axe optique conjugué du plan objet P par le système optique) en fonction du champ normalisé. On y retrouve la forme sphérique de la courbure de champ.

Ainsi, lorsque le capteur C est plan, l'image acquise ne peut pas être parfaitement au point simultanément en chaque endroit du champ.

En pratique, il s'agit d'un défaut très visible sur les images, car la présence de courbure de champ se traduit généralement par une dégradation du niveau de netteté en bord de champ.

Il est connu de compenser partiellement cette aberration par une conception adaptée du système optique, en jouant notamment sur le nombre, la forme et les propriétés des lentilles. La plupart du temps, cette compensation n'est cependant que partielle et ne permet pas d'éliminer complètement ce défaut.

La figure 4 illustre un exemple d'écart D entre le point de focalisation et le plan image en fonction du champ normalisé pour un système dont l'optique a été conçue pour limiter l'effet de la courbure de champ.

On constate que la courbure de champ n'est plus sphérique. Le champ est même pratiquement plan au centre. Une courbure apparaît néanmoins en bord de champ, bien que de façon atténuée par rapport à la situation non corrigée telle qu'illustrée sur la figure 3.

En plus de complexifier le système optique, et donc d'augmenter son coût, une telle correction est susceptible d'introduire d'autres défauts et/ou un relâchement d'autres critères.

Une autre manière connue de compenser la courbure de champ introduite par le système optique consiste, pour certains appareils photographiques argentiques, à réaliser une courbure physique du film.

Cette solution est cependant plus délicate à mettre en oeuvre dans le cas d'un capteur numérique. La conception d'un capteur numérique de forme sphérique épousant les variations de focalisation dues à la courbure de champ serait particulièrement complexe et coûteuse.

Si les corrections mentionnées ci-dessus peuvent avoir une certaine efficacité vis-à-vis de la courbure de champ introduite par le système optique, il peut subsister dans l'image de mauvaises focalisations dues à la profondeur de champ du système de capture d'images, laquelle définit une plage de distances objet pour lesquelles les images capturées sont nettes.

En effet, une scène à capturer comportant à la fois des objets proches et des objets lointains entraîne des focalisations différentes selon les zones de l'image correspondant à ces objets. La scène n'étant pas connue à l'avance, ce phénomène ne peut être compensé par un paramétrage fixé au stade de la conception du système.

En ce qui concerne la mauvaise exposition de l'image, elle peut par exemple provenir de différences de luminosité au sein de la scène à capturer. C'est typiquement le cas des contre-jours. Dans le cas d'un portrait à contre-jour, l'image de la personne photographiée est en effet sous-exposée, tandis que l'image d'arrière-plan est surexposée.

Et même en l'absence de variations de la luminosité au sein de la scène à capturer, l'exposition appropriée peut s'avérer délicate à déterminer. C'est notamment le cas des photos réalisées en basse lumière.

Le défaut de certains systèmes de capture d'images, communément appelé vignettage, qui se traduit par une répartition inégale de la lumière dans l'image (la luminosité étant généralement plus importante au centre qu'aux coins de l'image), augmente aussi la difficulté pour déterminer une exposition appropriée.

Un but de la présente invention est d'améliorer la qualité des images capturées en limitant certains au moins des défauts susmentionnés.

Pour ce faire, elle tire profit de l'existence d'un obturateur à balayage électronique et fait varier certains paramètres et/ou certaines caractéristiques du système de capture au cours du balayage.

Le document WO-A-20061098955 divulgue un système de capture d'images avec obturateur à balayage électronique comprenant des moyens d'adaptation de la focalisation agencés pour obtenir, lors d'une pré-capture d'une image, des focalisations différentes de la lumière vers le capteur. Après la capture, l'image est analysée pour déterminer la partie de l'image ayant la meilleure netteté.

Le document USA-2009/0073305, publié après la date de priorité de la présente demande, divulgue un autre système autofocus pour un dispositif de capture d'images avec obturateur à balayage électronique, comprenant des moyens d'adaptation de la focalisation pendant l'exposition.

L'invention , qui est définie dans les revendications, propose ainsi un système de capture d'images comprenant un capteur incluant une pluralité d'éléments photosensibles, un système optique pour focaliser la lumière vers le capteur et un obturateur à balayage électronique agencé pour exposer à la lumière les éléments photosensibles à des instants dépendant de leurs positions respectives au sein du capteur. Ce système de capture d'images comprend en outre des moyens pour adapter, à un instant donné, la focalisation de la lumière vers le capteur et/ou l'exposition à la lumière pour une partie au moins des éléments photosensibles exposés à la lumière audit instant donné.

Cette adaptation, réalisée en synchronisation avec l'action de l'obturateur à balayage électronique, permet d'améliorer la qualité des images acquises, en termes de netteté, de luminosité, ou autre.

Selon l'étendue de l'adaptation, l'amélioration de la qualité peut être obtenue sur une partie de l'image acquise (si une seule adaptation limitée à un sous-ensemble d'éléments photosensibles du capteur est mise en oeuvre par exemple), ou sur toute l'image acquise (si des adaptations sont mises en oeuvre successivement sur des parties recouvrant l'ensemble du capteur par exemple).

En effet, l'adaptation peut être effectuée à un seul instant donné, de manière à adapter la focalisation de la lumière vers le capteur et/ou l'exposition à la lumière pour la seule partie des éléments photosensibles exposés à la lumière à cet instant donné par l'ERS. Selon l'invention, elle est effectuée à au moins deux instants distincts, de façon à obtenir une focalisation de la lumière vers le capteur et/ou une exposition à la lumière adaptée à au moins deux parties du capteur exposées à la lumière par l'ERS à ces instants. On a alors potentiellement des focalisations et/ou des expositions différentes en au moins deux endroits distincts de l'image capturée. Si l'adaptation est répétée à des instants couvrant tout le temps de balayage du capteur par l'ERS, elle peut permettre une focalisation de la lumière vers le capteur et/ou une exposition à la lumière optimale pour tous les éléments photosensibles du capteur.

Les moyens d'adaptation de la focalisation de la lumière vers le capteur et/ou de l'exposition à la lumière peuvent être divers. Ils peuvent par exemple comprendre un système autofocus ou autre système agencé pour assurer un déplacement relatif entre le système optique et le capteur, en synchronisation avec l'obturateur à balayage électronique.

En alternative ou en complément, les moyens d'adaptation de la focalisation de la lumière vers le capteur et/ou de l'exposition à la lumière peuvent comprendre des moyens de changement de forme et/ou de propriété du système optique et/ou du capteur et/ou du système de capture d'image, en synchronisation avec l'obturateur à balayage électronique.

Selon l'invention, on appelle système autofocus tout système agencé pour assurer un déplacement relatif entre le système optique et le capteur quel que soit le type de déplacement. En alternative ou en complément, ils peuvent comprendre des moyens de changement d'une forme et ou propriété du système optique, en synchronisation avec l'obturateur à balayage électronique. En alternative ou en complément, ils peuvent comprendre des moyens pour régler l'ouverture du système optique, en synchronisation avec l'obturateur à balayage électronique.

En alternative ou en complément, les moyens d'adaptation de la focalisation de la lumière vers le capteur et/ou de l'exposition à la lumière peuvent comprendre des moyens de sélection d'un facteur de gain et/ou d'un temps d'exposition, en synchronisation avec l'obturateur à balayage électronique.

En alternative ou en complément, les moyens d'adaptation de la focalisation de la lumière vers le capteur et/ou de l'exposition à la lumière peuvent comprendre un module d'éclairage pour éclairer une scène à capturer, dont l'intensité lumineuse est réglée de manière synchronisée avec l'obturateur à balayage électronique.

En alternative ou en complément, les moyens d'adaptation de la focalisation de la lumière vers le capteur et/ou de l'exposition à la lumière peuvent comprendre un dispositif d'ouverture variable, notamment un diaphragme du système optique dont l'ouverture est réglée de manière synchronisée avec l'obturateur à balayage électronique.

En alternative ou en complément, les moyens d'adaptation de la focalisation de la lumière vers le capteur et/ou de l'exposition à la lumière peuvent comprendre un dispositif de variation de focale, notamment un zoom optique dont la focale est réglée de manière synchronisée avec l'obturateur à balayage électronique.

D'autres moyens d'adaptation de la focalisation de la lumière vers le capteur et/ou de l'exposition à la lumière sont envisageables pour améliorer la qualité des images acquises.

L'invention propose aussi une utilisation, pour améliorer la qualité des images acquises, d'un système de capture d'images tel que mentionné ci-dessus et comprenant un capteur incluant une pluralité d'éléments photosensibles, un système optique pour focaliser la lumière vers le capteur et un obturateur à balayage électronique agencé pour exposer à la lumière les éléments photosensibles à des instants dépendant de leurs positions respectives au sein du capteur. Selon cette utilisation, on adapte, à un instant donné, la focalisation de la lumière vers le capteur et/ou l'exposition à la lumière pour une partie au moins des éléments photosensibles exposés à la lumière audit instant donné.

L'adaptation peut être répétée à des instants successifs, éventuellement jusqu'à ce qu'elle ait concerné l'ensemble des éléments photosensibles du capteur.

D'autres particularités et avantages de la présente invention apparaîtront dans la description ci-après d'exemples de réalisation non limitatifs, en référence aux dessins annexés, dans lesquels :
- la figure 1, déjà commentée, est un schéma représentant une exposition des lignes d'éléments photosensibles d'un capteur au cours du temps, par l'effet d'un obturateur à balayage électronique ;
- la figure 2, déjà commentée, est un schéma illustrant l'effet de la courbure de champ ;
- les figures 3 et 4, déjà commentées, sont des courbes illustrant l'effet de la courbure de champ respectivement dans un système non corrigé et dans un système dont l'optique a été conçue pour limiter cet effet ;
- la figure 5 est un schéma montrant un exemple de système de capture d'images selon l'invention (le système autofocus AF étant optionnel dans certains modes de réalisation de l'invention) ;
- la figure 6 est un schéma montrant des réponses d'un capteur à des instants successifs ;
- la figure 7 est un schéma montrant un exemple de système de capture d'images dont le capteur présente une courbure selon une direction ;
- la figure 8 est un schéma montrant le capteur d'un exemple de système de capture d'images selon un mode de réalisation de l'invention ;
- la figure 9 est un schéma montrant un exemple de balayage d'un capteur par ligne selon la plus petite dimension du capteur (colonne) ;
- la figure 10 est un schéma montrant un exemple de balayage symétrique et simultané de deux moitiés d'un capteur ;
- la figure 11 est un schéma montrant un exemple de balayage d'un capteur avec un temps d'exposition réduit ;
- la figure 12 est un schéma illustrant les caractéristiques d'une image obtenue en pré-capture ; et
- la figure 13 est un schéma illustrant les caractéristiques d'une autre image obtenue en pré-capture.

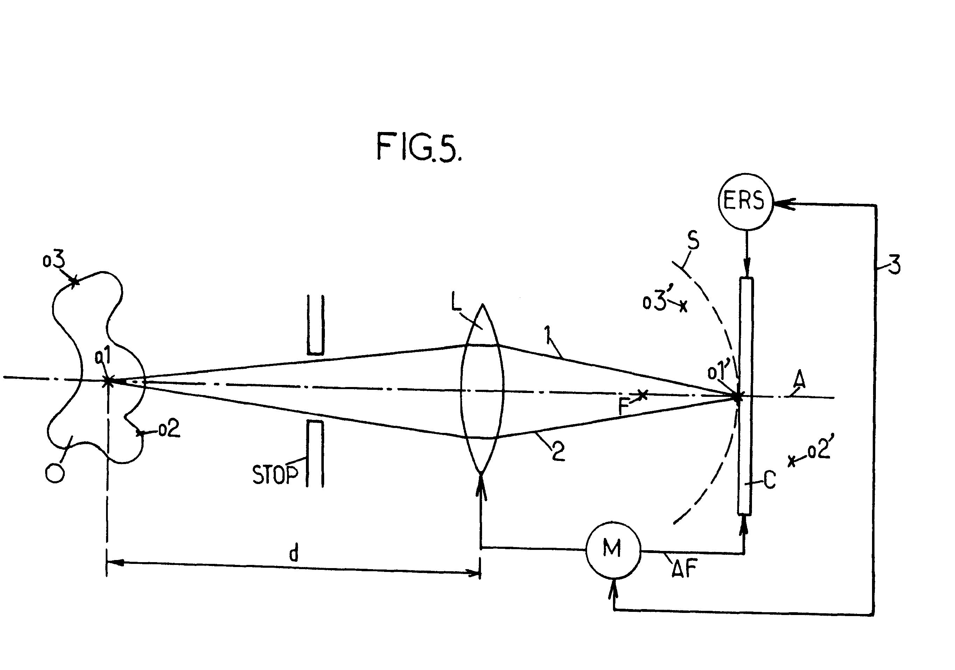

La figure 5 montre un exemple non limitatif de système de capture d'images selon l'invention.

Ce système comprend un capteur C incluant une pluralité d'éléments photosensibles (par exemple des pixels) et un système optique L pour focaliser la lumière vers le capteur C. Le capteur C et le système optique L peuvent être classiques et conformes à ce qui a été décrit en introduction.

Ce système de capture d'images comprend en outre un obturateur à balayage électronique (ERS ci-après) agencé pour exposer à la lumière les élément photosensibles du capteur C à des instants dépendant de leurs positions respectives au sein du capteur.

L'ERS peut également être classique et conforme à la description faite en introduction. A titre d'exemple, il peut effectuer un balayage par lignes successives d'éléments photosensibles du capteur. Alternativement, l'ERS utilisé dans le cadre de la présente invention peut effectuer d'autres types de balayages, dont certains exemples seront décrits plus bas.

Le système de capture d'images selon l'invention comprend en outre des moyens pour adapter, à un instant donné, la focalisation de la lumière vers le capteur C et/ou l'exposition à la lumière pour une partie au moins des éléments photosensibles exposés à la lumière audit instant donné (cette partie pouvant représenter la totalité ou un sous-ensemble seulement des éléments photosensibles exposés à la lumière audit instant donné par l'action de l'ERS).

Ces moyens d'adaptation peuvent prendre diverses formes selon le type d'amélioration de la qualité des images capturées qu'on cherche à obtenir.

Dans un premier mode de réalisation, ces moyens comprennent un système autofocus AF agencé pour assurer un déplacement relatif entre le système optique L et le capteur C, par exemple à l'aide d'un moteur M.

Ce déplacement est avantageusement une translation selon l'axe optique A du système de capture d'images, bien que d'autres mouvements puissent être également envisagés, par exemple selon les axes perpendiculaires à l'axe optique pour obtenir un effet de stabilisation d'image. Lorsque le système optique L comprend une pluralité de lentilles, seule une partie d'entre elles peuvent éventuellement subir un déplacement relatif par rapport au capteur C.

Le système autofocus AF est en outre synchronisé avec l'ERS (comme symbolisé par la double flèche 3) de manière à adapter, à un instant donné, la focalisation de la lumière vers le capteur C pour une partie des éléments photosensibles exposés à la lumière audit instant donné par l'action de l'ERS.

Ainsi, le système autofocus AF peut permettre un déplacement relatif entre le système optique L et le capteur C tel que la focalisation des rayons soit la meilleure possible dans la partie exposée à un instant donné par l'ERS.

Par exemple, lorsque le système optique L introduit une courbure de champ par exemple sphérique, le système autofocus AF peut tenir compte de cette courbure de champ pour adapter la focalisation de la lumière en fonction de la partie du capteur exposée à la lumière à un instant donné. Ceci revient à dire que, par l'action de l'autofocus AF, le capteur C peut suivre au moins partiellement la courbure de champ introduite par le système optique L.

Ainsi, lorsque la courbure de champ introduite par le système optique L transforme l'image d'un plan en une surface courbe S, telle qu'une surface sphérique ayant l'axe optique A comme axe de révolution, le système autofocus AF peut faire en sorte que le capteur C se déplace selon cette courbe S au fur et mesure que l'ERS expose les différents éléments photosensibles du capteur C.

A titre d'illustration, la figure 5 montre une position relative du système L et du capteur C adaptée pour optimiser la focalisation de la lumière pour des éléments photosensibles situés au centre du capteur.

Le système optique L et le capteur C seraient en revanche amenés par le système autofocus AF dans des positions plus proches l'un de l'autre, lorsque l'ERS expose à la lumière les éléments photosensibles situés en haut ou en bas du capteur C.

Si l'ERS effectue un balayage du capteur par lignes successives de haut en bas, le système autofocus AF conduit alors à éloigner progressivement le système optique L et le capteur C l'un de l'autre jusqu'à la position représentée sur la figure 5, puis à les rapprocher progressivement l'un de l'autre.

De cette façon, on introduit une courbure virtuelle du capteur C plan qui assure une correction de la courbure de champ du même type que celle qui était obtenue par une courbure réelle d'un capteur argentique telle que mentionnée en introduction.

On notera qu'un compromis pourrait être recherché entre l'amélioration de la netteté des images capturées et le nombre de déplacements effectués par le système autofocus. De plus, la vitesse de déplacement autorisée par le système autofocus peut constituer une limite à prendre en compte pour définir la proportion des éléments photosensibles exposés à la lumière pour laquelle la focalisation doit être adaptée.

On comprendra aussi que, lorsque le système agencé pour assurer un déplacement relatif entre le système optique L et le capteur autorise des déplacements autres que des translations selon l'axe optique A d'un autofocus AF, ceux-ci peuvent être exploités pour mieux suivre la courbe S dans ses composantes autres que longitudinales et/ou compenser un mouvement du système de capture d'image et/ou compenser un défaut de fabrication tel un flou asymétrique lié à un écart entre l'axe optique du système optique (L) et l'axe perpendiculaire au centre du capteur.

Puisque le système, notamment autofocus AF, agencé pour assurer un déplacement relatif entre le système optique L et le capteur est synchronisé avec l'ERS, le déplacement relatif du système optique L et du capteur C qu'il permet peut être vu comme dépendant du temps d'exposition des éléments photosensibles, de la vitesse de balayage électronique et du sens du balayage autorisé par l'ERS. Ce déplacement peut en outre dépendre de la focale, de l'ouverture ou encore du type d'optique et de capteur du système.

Dans ce qui vient d'être décrit, on a supposé que le capteur C était plan. Toute autre forme du capteur est néanmoins envisageable.

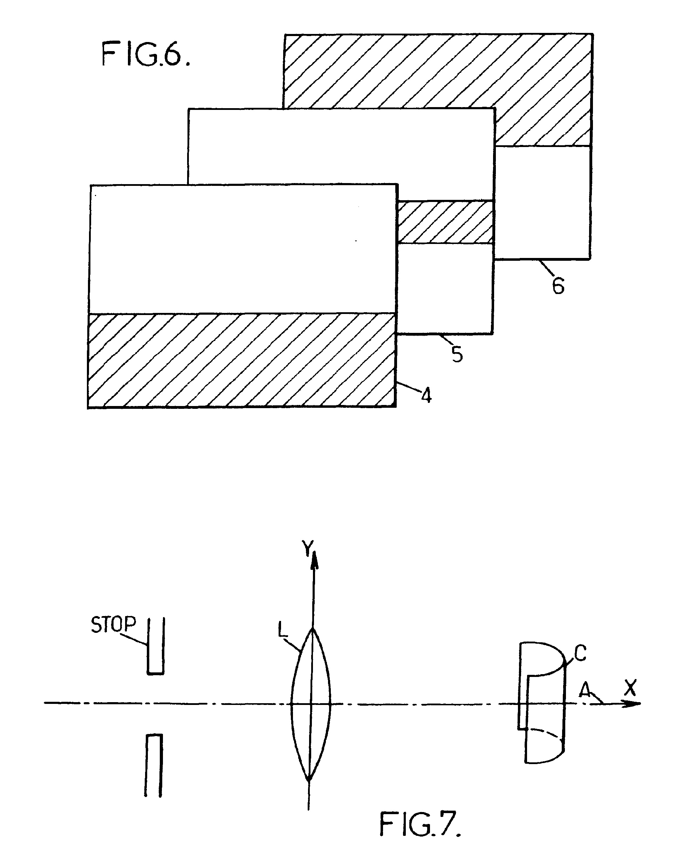

A titre d'exemple, la figure 7 montre un système de capture d'images comprenant un capteur C présentant une courbure selon la direction X (qui est la direction de l'axe optique A). Cette forme peut être parabolique, ou bien comprendre un ou plusieurs extrema à distance de ses bordures verticales (e.g. selon une forme de M en vue de dessus), etc. Dans ce cas, la courbure du capteur peut avantageusement permettre en elle-même une correction partielle de la courbure de champ introduite par l'optique L, cette correction concernant la composante de la courbure de champ selon la direction X.

L'adaptation de la focalisation de la lumière vers le capteur en fonction de la partie du capteur exposée à la lumière par l'ERS, à l'aide d'un système autofocus tel que décrit plus haut, peut alors permettre d'améliorer encore la qualité de l'image capturée en corrigeant l'effet de la courbure de champ selon la direction Y perpendiculaire à la direction X.

D'autres combinaisons sont bien sûr envisageables pour obtenir une correction de la courbure de champ selon plusieurs de ses composantes, comme cela apparaîtra à l'homme du métier. Par exemple, des courbures du capteur selon d'autres directions que la direction X et une correction par usage synchronisé du système autofocus et de l'ERS selon d'autres directions que la direction Y sont possibles.

En complément ou en remplacement de la correction de la courbure de champ décrite jusque là, l'adaptation de la focalisation de la lumière vers le capteur pour une partie des éléments photosensibles exposés à la lumière à un instant donné peut tenir compte d'une estimation de la distance objet relative à une partie d'une scène à laquelle ladite partie des éléments photosensibles est exposée audit instant donné.

En effet, selon la distance objet qui sépare le système optique L d'une partie de la scène à capturer, la partie correspondante de l'image à capturer peut être plus ou moins nette. En général, la plage de distances objet, c'est-à-dire de distances selon l'axe optique entre l'objet à capturer et le système optique, donnant lieu à une image capturée nette est propre à un système de capture d'images donné et est appelée la profondeur de champ.

Le système autofocus AF synchronisé avec l'ERS peut assurer un déplacement relatif du système optique L et du capteur C de manière à ce que la focalisation se fasse sensiblement sur une partie du capteur exposée à la lumière à un instant donné, en tenant compte de la distance objet.

On améliore ainsi la netteté de l'image capturée, y compris pour des distances objet situées en dehors de la plage définie par la profondeur de champ associée à l'optique L. En d'autres termes, la profondeur de champ d'un tel système est augmentée par l'action synchronisée du système autofocus AF et de l'ERS.

Ce principe est illustré à la figure 5, où un système de capture d'images tel que décrit plus haut est soumis à une scène O.

Cette scène O comprend une pluralité de points, tels que o1-o3, dont les distances objet au système optique L (e.g. d pour le point o1) diffèrent.

Le système autofocus AF fait alors en sorte que les rayons 1 et 2 issus du point o1 de la scène O se focalisent sensiblement sur le capteur C en un point o1', ce qui assure la netteté de l'image en ce point.

De même, l'image o3' du point o3 de la scène O, à travers le système optique L, se situant à gauche du point o1', le système autofocus AF fera alors en sorte de rapprocher le capteur C et l'optique L, de façon que le point image o3' se situe sensiblement sur le capteur C au moment où la partie correspondante du capteur sera exposée à la lumière par l'ERS.

De façon similaire, un éloignement du système optique L et du capteur C sera réalisé par le système autofocus AF en synchronisation avec l'ERS pour obtenir une image o2' nette du point o2 de la scène O à capturer, au moment où la partie correspondante du capteur sera exposée à la lumière par l'ERS.

Pour ce faire, une analyse préalable de la scène à capturer (par exemple suite à une pré-capture ou « preview ») peut être réalisée avant la capture d'images. Au cours de cette analyse, le système autofocus fait par exemple varier la distance relative entre le système optique AF et le capteur C. Une mesure de netteté est réalisée pour certaines positions issues de cette variation de distances.

La figure 6 illustre un exemple dans lequel trois positions relatives du système optique L et du capteur C ont été testées à des instants successifs 4 à 6. L'analyse révèle une image nette dans sa partie inférieure à l'instant 4 (la netteté étant symbolisée par des hachures). A l'instant 5, une portion intermédiaire de l'image est nette, tandis que les parties inférieures et supérieures de cette image sont floues. Enfin, à l'instant 6, c'est la partie supérieure de l'image qui est nette, tandis que le reste de l'image est flou.

Contrairement à la méthode de l'art antérieur, une position intermédiaire unique de l'optique et du capteur n'est pas choisie par le système autofocus pour l'ensemble de la capture d'images à suivre. Au contraire, le système autofocus va assurer un déplacement relatif synchronisé avec l'ERS pour permettre une focalisation de la lumière vers le capteur qui assure une netteté maximale pour les différentes parties de l'image telles qu'elles ont été détectées par l'analyse préalable.

Ainsi, de façon schématique, la position relative du système optique L et du capteur C retenue pendant la capture sera sensiblement celle correspondant à l'instant 6 tant qu'une partie supérieure du capteur est exposée à la lumière par l'ERS. Puis une position correspondant sensiblement à l'instant 5 sera choisie pour les instants où une partie intermédiaire du capteur sera exposée à la lumière. Enfin une position correspondant sensiblement à l'instant 4 sera sélectionnée pour la fin de la capture, si l'on considère un balayage du capteur par l'ERS de haut en bas.

Ce mode de fonctionnement peut être utilisé par exemple pour capturer l'image d'un immeuble de grande hauteur. Dans ce cas, la focalisation est adaptée à la distance du haut de l'immeuble pour la partie supérieure du capteur, à la distance du milieu de l'immeuble pour la partie intermédiaire du capteur et à la distance du bas de l'immeuble pour la partie inférieure du capteur. Autrement dit, on rapproche la focalisation pour s'adapter au rapprochement de la perspective. La forme virtuelle du capteur est assimilable, dans ce cas, à un plan non perpendiculaire à l'axe optique.

De même, si pour des raisons liées à la précision de fabrication, l'axe optique du système optique L n'est pas perpendiculaire au capteur, la focalisation synchronisée avec l'ERS permet de corriger au moins en partie le flou résultant de cette inclinaison sans pour autant avoir besoin de prédéterminer l'inclinaison, donc sans surcoût de mesure individuelle sur la chaîne de fabrication.

En variante ou en complément d'un déplacement relatif entre le système optique et le capteur, l'adaptation de la focalisation en fonction de la partie du capteur exposée par l'ERS peut être réalisée par un changement de la forme et/ou de propriétés du système optique synchronisé avec l'ERS. Une telle déformation ou modification de propriétés du système optique peut par exemple être mise en oeuvre lorsque ce dernier comprend une ou plusieurs lentilles liquides. L'utilisation d'un dispositif de modulation de phase à cristaux liquides (DPLC) est un exemple de modification de propriétés du système optique permettant d'adapter la focalisation.

Selon un autre exemple qui peut être combiné avec les précédents, le système autofocus AF peut, lors d'une pré-capture d'une image unique, faire varier les positions relatives du système optique L et le capteur en synchronisation avec l'ERS, de manière à obtenir des focalisations respectives de la lumière vers le capteur pour différents groupes d'éléments photosensibles du capteur. Cette variation des positions relatives du système optique L et du capteur peut par exemple être progressive et régulière. La variation de focalisation qu'elle entraîne amène à avoir des différences de netteté au sein de l'image unique pré-capturée.

Un module d'analyse du système de capture d'images permet alors de déterminer un des groupes d'éléments photosensibles du capteur pour lequel la netteté satisfait un critère de qualité. Ce critère de qualité peut être choisi pour que soit retenu le groupe d'éléments photosensibles pour lequel la netteté est la meilleure. Il peut par exemple consister en une mesure de contraste et sa comparaison avec un seuil prédéterminé. Bien sûr, d'autres critères de qualité sont également envisageables comme cela apparaîtra à l'homme du métier.

Pour la capture de l'image, le système autofocus peut alors régler le déplacement relatif entre le système optique et le capteur en fonction de la focalisation obtenue pour le groupe déterminé par le module d'analyse. Ce déplacement relatif peut par exemple correspondre aux positions relatives du système optique et du capteur qui étaient utilisées lors de l'exposition par l'ERS du groupe d'éléments photosensibles déterminé au cours de la pré-capture d'image.

Ainsi, on augmente les chances d'avoir une focalisation, et donc une netteté, correcte voire optimale pour une partie au moins des éléments photosensibles du capteur, voire pour l'ensemble du capteur si la scène capturée est telle que la distance objet varie peu.

De plus, le fait que le système autofocus soit synchronisé avec l'ERS lors de la pré-capture d'une image unique permet d'obtenir la focalisation optimale de façon particulièrement rapide et efficace.

En résumé, le premier mode de réalisation décrit jusque là tire profit de l'action de l'obturateur à balayage électronique ERS pour corriger des défauts de focalisation, tels que la courbure de champ générée par le système optique et/ou la profondeur de champ résultant de la distance objet aux différentes parties de la scène à capturer et/ou le flou résultant d'un défaut de fabrication du système de capture d'image.

Ceci est réalisé par exemple par un déplacement relatif du système optique et du capteur assuré par le système autofocus pour adapter la focalisation à une partie de l'image exposée par l'ERS un instant donné. En variante ou en complément, un changement de forme et/ou de propriétés du système optique peut être mis en oeuvre.

Ce mécanisme peut être effectué de manière ponctuelle ou à des instants successifs au fur et à mesure du balayage du capteur par l'ERS.

On notera que le premier mode de réalisation décrit est applicable à un système de capture d'images comprenant un zoom. Dans ce cas, le système autofocus sera avantageusement agencé en synchronisation avec l'ERS pour améliorer la netteté des images, une fois choisie la focale correspondant au grossissement souhaité.

En variante, le changement de forme et/ou de propriétés du système optique peut consister à faire varier le facteur d'agrandissement du zoom de manière synchronisée avec l'ERS pour corriger une partie de la distorsion géométrique du système de capture d'image. En effet la distorsion géométrique correspond à un grandissement local dans l'image qui pourra être corrigé pour les éléments photosensibles exposés à chaque instant en agissant de manière synchronisée sur le facteur de grandissement de l'optique. La distorsion géométrique provient d'aberrations du système optique mais aussi de la géométrie du capteur. Ainsi dans la variante de réalisation consistant à utiliser un capteur courbe telle que décrite dans ce document, on pourra utiliser le zoom pour compenser l'impact de la courbure du capteur sur la distorsion géométrique.

La variation du facteur d'agrandissement du zoom de manière synchronisée avec l'ERS permet également de corriger des effets de perspective et ainsi par exemple lors de la prise de vue d'un monument au niveau du sol, de redresser celui-ci pour simuler une prise de vue de face à une plus grande hauteur. Le système de capture d'image pourrait ainsi avantageusement permettre à l'utilisateur de régler sa position virtuelle de prise de vue non seulement dans la direction de la scène capturée comme le permet un zoom, mais également dans les directions perpendiculaires.

La variation du facteur d'agrandissement du zoom de manière synchronisée avec l'ERS permet également de simuler une projection de l'image sur toute surface autre que celle du capteur pour corriger par exemple les déformations des visages lors de photo de groupe liée à l'anamorphose de volume.

Selon un deuxième mode de réalisation, qui peut éventuellement être combiné avec le premier, les moyens d'adaptation du système de capture d'images comprennent des moyens pour adapter l'exposition à la lumière pour une partie au moins des éléments photosensibles exposés à la lumière par l'ERS à un instant donné. Ces moyens peuvent prendre des formes diverses.

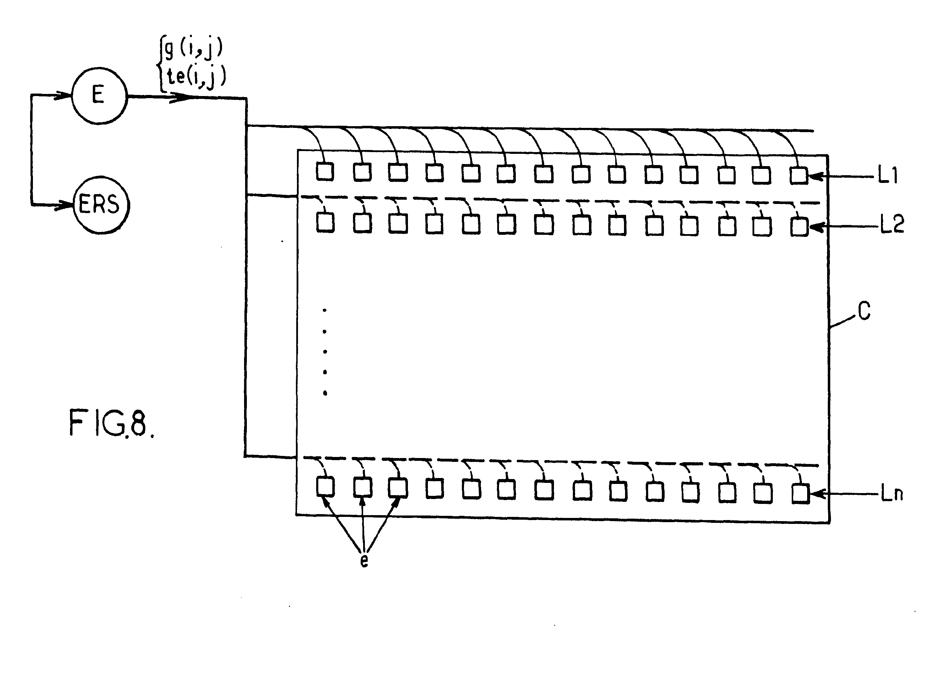

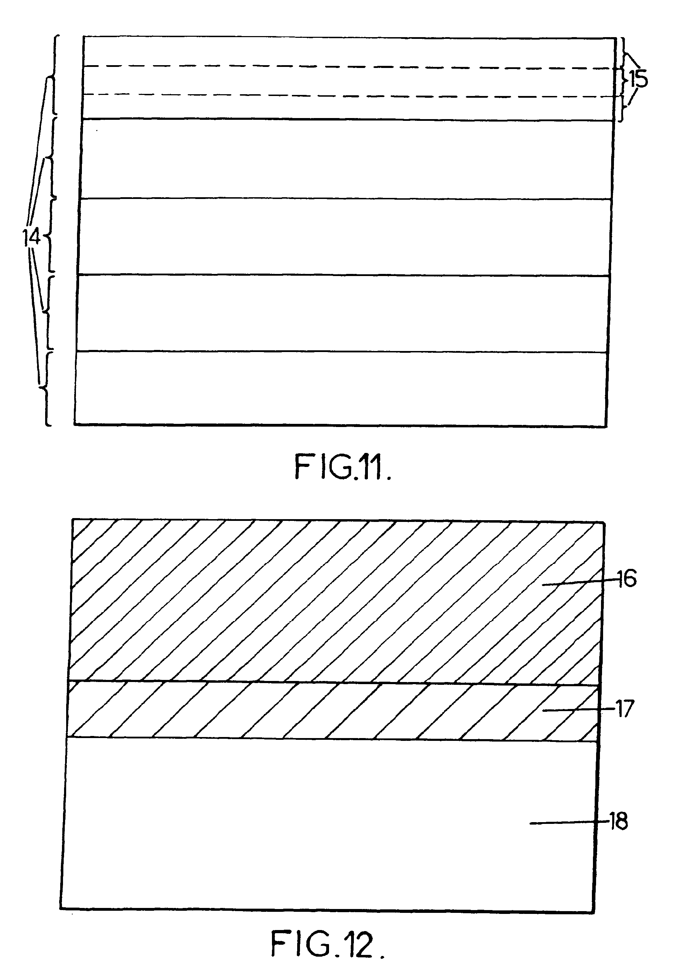

Selon un premier exemple, ils comprennent des moyens de sélection d'un facteur de gain et/ou d'un temps d'exposition pour des éléments photosensibles du capteur, en fonction d'une exposition préalablement estimée. Ce principe est illustré sur les figures 8 et 12.

La figure 12 montre le résultat d'une analyse préalable (par exemple suite à une pré-capture ou « preview ») permettant de déterminer l'exposition par zones de l'image, avant la capture d'image définitive.

Dans cet exemple, l'analyse permet la détection de trois zones principales de l'image et donc du capteur. La zone supérieure 16 correspond à une partie de l'image sous-exposée et donc trop sombre (ce qui est symbolisé par des hachures serrées). La zone inférieure 18 correspond à une partie de l'image surexposée et donc trop claire (ce qui est symbolisé par l'absence de hachures). La zone intermédiaire 17 correspond, quant à elle, à une partie de l'image d'exposition correcte (ce qui est symbolisé par des hachures espacées).

Lors de la capture ultérieure d'images, les éléments photosensibles du capteur sont commandés pour représenter une exposition qui est fonction des résultats de l'analyse préalable. Cette commande est en outre synchronisée avec l'ERS, pour que l'exposition des éléments photosensibles soit ajustée au moment où l'ERS expose ces éléments photosensibles à la lumière.

Comme illustré à la figure 8, un module de réglage E de l'exposition peut ainsi affecter un facteur de gain g(i,j) et/ou un temps d'exposition te(i,j) à chaque élément photosensible de position (i,j) au sein du capteur C, i et j représentant par exemple la position au sein d'une ligne et au sein d'une colonne respectivement du capteur C. Un tel facteur de gain g(i,j) et/ou un tel temps d'exposition te(i,j) modifie l'exposition de l'élément photosensible concerné et influe donc la réponse de ce dernier.

Les éléments photosensibles e des premières lignes du capteur C en partant du haut se verront ainsi affecter un facteur de gain et/ou un temps d'exposition plus élevé que celui (ou ceux) des dernières lignes du capteur, de façon à compenser la sous-exposition des premiers et la surexposition des derniers, comme cela résulte de l'analyse faite en « preview ».

Les éléments photosensibles e des lignes intermédiaires du capteur C se voient affecter des valeurs de facteur de gain et/ou de temps d'exposition intermédiaires, pour conserver leur bonne exposition telle qu'elle a été révélée par l'analyse faite en « preview ».

La figure 8 commentée ci-dessus suppose qu'une valeur de gain et/ou un temps d'exposition peut être sélectionnée pour chacun des éléments photosensibles e du capteur C de manière indépendante. Il est cependant possible de définir des valeurs de facteur de gain et/ou de temps d'exposition pour tout un groupe d'éléments photosensibles à la fois, par exemple pour une ligne ou un ensemble de lignes, une colonne ou un ensemble de colonnes, etc.

Si par exemple, contrairement à ce qui a été décrit en référence à la figure 8, les paramètres modifiant l'exposition des éléments photosensibles ne peuvent pas être sélectionnés de manière individuelle par élément photosensible, mais plutôt par groupe d'éléments photosensibles, voire pour la totalité du capteur C, cela ne pose pas de problème dans la mesure où les valeurs sélectionnées ne seront actives que pour les éléments photosensibles exposés à la lumière par l'ERS. Il faudra donc bien veiller, dans ce cas, à ce que les valeurs pertinentes des paramètres soient sélectionnées en relation avec la partie du capteur exposée à la lumière par l'ERS à un instant donné, ou à des instants successifs tout au long du balayage électronique du capteur.

En remplacement ou en complément du facteur de gain et/ou du temps d'exposition évoqués ci-dessus, d'autres paramètres relatifs aux éléments photosensibles du capteur pourraient être adaptés dans le but d'améliorer leur exposition à la lumière lors de la capture d'image.

Grâce à cette correction, l'image capturée peut alors être exposée correctement sur toute sa surface, indépendamment du fait que certaines parties du capteur sont plus ou moins bien exposées naturellement, soit en raison de défauts du système de capture d'images, soit en raison de la nature de la scène à capturer qui peut comprendre des parties plus ou moins lumineuses.

A titre d'exemple, le phénomène de vignettage peut être limité grâce à ce mode de réalisation de l'invention. On rappelle que le vignettage est un défaut lié au système de prise de vue qui se traduit par une répartition inégale de la lumière dans l'image : la luminosité est plus importante au centre qu'aux coins. Le vignettage est dû à la fois à l'optique et au capteur.

En influant sur l'exposition des éléments photosensibles du capteur en synchronisation avec l'ERS, on peut en effet compenser ce déséquilibre, de façon que le centre et les coins de l'image capturée aient une luminosité comparable en évitant les effets indésirables des méthodes traditionnelles de correction par application d'un gain numérique à posteriori qui augmentent le bruit.

En alternative ou en complément, l'adaptation de l'exposition à la lumière pour une partie au moins des éléments photosensibles exposés à la lumière par l'ERS peut résulter de l'éclairage de la scène à capturer par un module d'éclairage tel qu'un flash.

Dans ce cas, l'intensité lumineuse du module d'éclairage peut être adaptée en fonction des éléments photosensibles du capteur exposés à la lumière par l'ERS à un instant donné.

Dans le cas où une analyse faite en « preview » donne les résultats déjà commentés en référence à la figure 12, le système de capture d'images peut alors faire en sorte d'activer un flash dont l'intensité est élevée tant que l'ERS expose à la lumière les éléments photosensibles du capteur correspondant à la partie supérieure 16 de la figure 12, puis une valeur intermédiaire lorsque les éléments photosensibles correspondant à la partie 17 sont exposés à la lumière, et enfin une valeur faible voire nulle lorsque l'ERS expose à la lumière les éléments photosensibles des dernières lignes du capteur correspondant à la zone 18.

Là encore, l'image capturée peut alors être exposée correctement sur toute sa surface, indépendamment du fait que certaines parties du capteur sont plus ou moins bien exposées naturellement, soit en raison de défauts du système de capture d'images, soit en raison de la nature de la scène à capturer qui peut comprendre des parties plus ou moins lumineuses.

Lorsque le flash n'a que deux états possibles (allumé ou éteint), on peut l'activer vis-à-vis d'une partie seulement des éléments photosensibles du capteur, le flash restant éteint lorsque l'ERS expose à la lumière les autres éléments photosensibles du capteur.

En alternative ou en complément, l'adaptation de l'exposition à la lumière pour une partie au moins des éléments photosensibles exposés à la lumière par l'ERS peut résulter d'un réglage de la taille de l'iris du système de capture d'images. On peut faire varier l'ouverture du système optique L par exemple en faisant varier l'ouverture ou la fermeture du diaphragme du système de capture d'images (STOP sur la figure 5) en synchronisation avec l'ERS pour laisser passer une quantité de lumière appropriée.

Selon un autre exemple qui peut être combiné avec les précédents, le système de capture d'images peut comprendre un premier et un deuxième modules d'éclairage pour éclairer une scène à capturer. Ces modules peuvent être distincts ou bien confondus. Le premier module d'éclairage peut par exemple mettre en oeuvre un pré-flash, tandis que le deuxième est un flash.

Avec cette configuration, on peut faire varier l'intensité lumineuse du premier module d'éclairage en synchronisation avec l'obturateur à balayage électronique ERS de manière à obtenir des expositions à la lumière respectives pour différents groupes d'éléments photosensibles du capteur. A titre d'exemple, l'intensité du premier module d'éclairage peut suivre une fonction croissante, par exemple linéaire ou affine, du temps au cours du balayage par l'ERS.

Si le premier module d'éclairage n'a que deux états possibles (allumé ou éteint), on peut également exploiter une simple variation d'état (tout ou rien) qui aura sur l'image l'effet d'une variation d'exposition selon que l'intégration d'une ligne donnée débute, termine ou se déroule entièrement durant le temps d'allumage du module d'éclairage.

On obtient ainsi une image (par exemple en « preview ») dont l'exposition varie selon la position dans l'image.

Un module d'analyse du système de capture d'images permet alors de déterminer un des groupes d'éléments photosensibles du capteur dont l'exposition satisfait un critère de qualité. Ce critère de qualité peut être choisi pour que soit retenu le groupe d'éléments photosensibles dont l'exposition moyenne est la meilleure. Il peut par exemple consister en une mesure de contraste et sa comparaison avec un seuil prédéterminé. Bien sûr, d'autres critères de qualité sont également envisageables comme cela apparaîtra à l'homme du métier.

Pour la capture de l'image, le deuxième module d'éclairage peut alors éclairer la scène à capturer avec une intensité lumineuse qui est fonction de l'exposition ainsi déterminée. L'intensité peut par exemple être prise égale à celle du premier module d'éclairage pour le groupe d'éléments photosensibles déterminé pour son exposition de qualité.

Ainsi, l'intensité du deuxième module d'éclairage permet d'augmenter les chances d'avoir une exposition correcte voire optimale pour une partie au moins des éléments photosensibles du capteur, voire pour l'ensemble du capteur si la scène capturée est relativement peu contrastée.

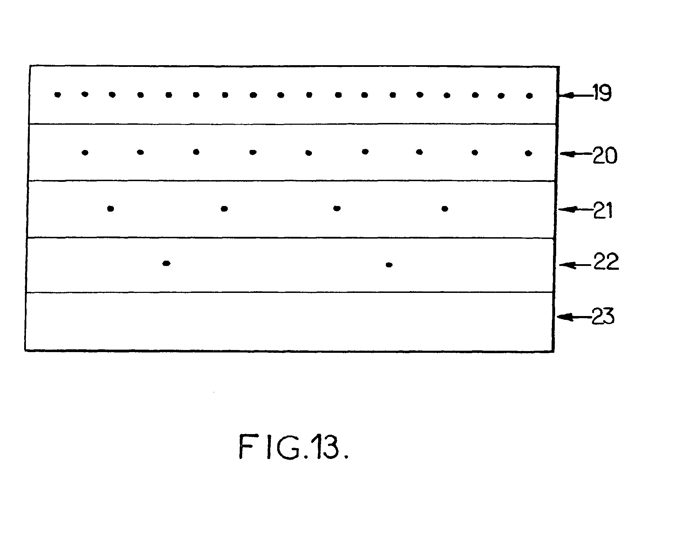

A titre d'exemple, on considère qu'une image du type de celle représentée sur la figure 13 est obtenue en « preview » à l'aide d'une variation, par exemple linéaire ou affine, de l'intensité lumineuse du premier module d'éclairage en synchronisation avec l'ERS. Cette image est de plus en plus claire au fur et à mesure qu'on la parcourt de haut en bas, comme symbolisé par l'usage de points de plus en plus espacés.

On suppose qu'une analyse de cette image permet de déduire que les éléments photosensibles intermédiaires du capteur correspondant à la zone 21 ont la meilleure exposition, si bien que l'intensité lumineuse du deuxième module d'éclairage peut être réglée en fonction de cette exposition.

Pour ce faire, l'intensité lumineuse du deuxième module d'éclairage peut être prise égale ou proche de celle du premier module d'éclairage au moment où les éléments photosensibles correspondant à la zone 21 ont été exposés à la lumière par l'ERS.

La suite de la description peut s'appliquer à tout mode de réalisation de l'invention, qu'il porte sur des moyens d'adaptation de la focalisation de la lumière vers le capteur et/ou de l'exposition à la lumière.

Les capteurs conventionnels sont généralement rectangulaires et les obturateurs à balayage électronique conventionnels effectuent un balayage de ces capteurs par lignes selon la plus grande dimension des capteurs. Ainsi, dans le cas d'un capteur rectangulaire, le balayage est généralement réalisé par ligne par ligne dans le sens de la longueur.

Quelle que soit l'exploitation de l'ERS qui est faite pour améliorer la qualité des images capturées, dont certains exemples ont été exposés plus haut, on peut avantageusement prévoir un balayage électronique de l'ERS pour exposer à la lumière, à partir-d'instants successifs, des lignes d'éléments photosensibles prises selon la plus petite dimension du capteur.

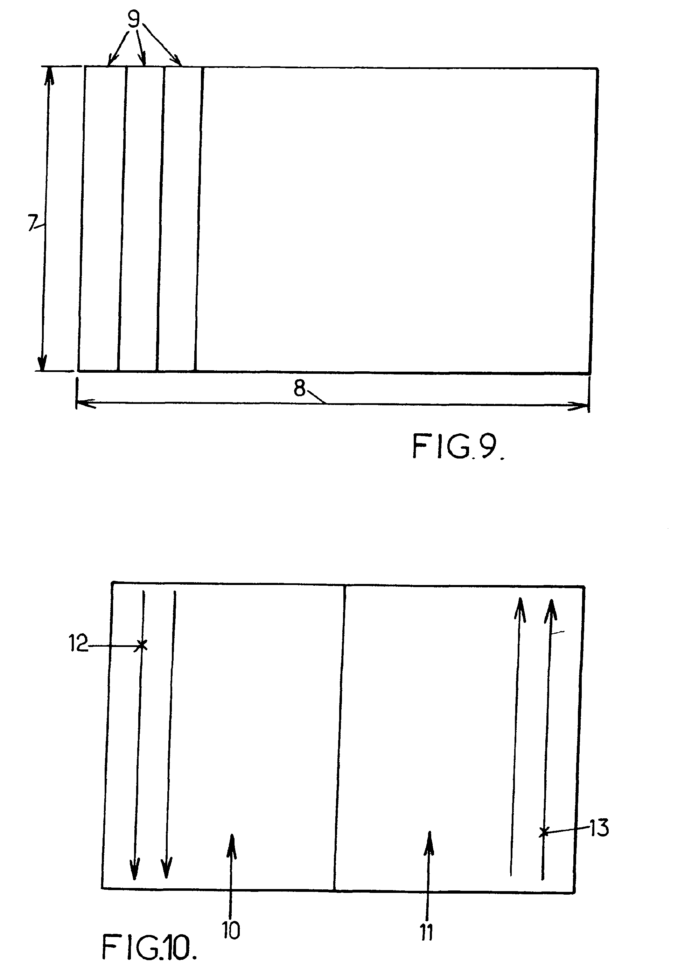

Dans l'exemple illustré à la figure 9, cela revient à dire que le balayage par l'ERS se fait par colonnes 9 d'éléments photosensibles successives du capteur (colonne par colonne, ou par groupe de colonnes par groupe de colonnes), les colonnes étant selon la hauteur 7 du capteur, plutôt que par lignes successives selon la longueur 8 du capteur.

De ce fait, l'adaptation de la focalisation de la lumière vers le capteur et/ou l'exposition à la lumière peut être adaptée à une partie plus limitée des éléments photosensibles du capteur.

Une colonne du capteur comprenant moins d'éléments photosensibles qu'une ligne, les variations de la courbure de champ, de la distance objet et/ou de l'exposition à la lumière sont plus faibles sur une colonne que sur une ligne. L'adaptation de la focalisation à la lumière vers le capteur et/ou l'exposition à la lumière pour une colonne d'éléments photosensibles, en synchronisation avec l'ERS, peut donc conduire à une amélioration de la qualité de l'image supérieure à celle qui serait obtenue pour une ligne d'éléments photosensibles.

Bien sûr, cette amélioration de la qualité a pour contrepartie une augmentation du nombre d'adaptations nécessaires, ce qui se traduit par exemple par une augmentation du nombre de déplacements commandés par le système autofocus dans le cas de la focalisation, ou du nombre de sélections de paramètres d'exposition des éléments photosensibles ou du nombre de valeurs d'intensité de flash à mettre en oeuvre au cours d'une capture d'image.

Le mode de balayage de l'ERS peut donc être choisi par rapport à un compromis à réaliser entre la qualité de l'image souhaitée et le nombre d'adaptations de la focalisation de la lumière vers le capteur et/ou de l'exposition à la lumière pour une capture d'images.

On comprendra d'ailleurs que d'autres types de balayage peuvent être prévus pour l'ERS, en plus des balayages par lignes ou par colonnes évoqués plus haut. Une combinaison de balayages par lignes et par colonnes est par exemple possible. Des balayages non linéaires du capteur, par exemple circulaires ou semi-circulaires, sont également envisageables. Dans tous les cas, l'adaptation de la focalisation de la lumière et/ou l'exposition à la lumière sera faite de manière correspondante et synchronisée avec le balayage retenu pour l'ERS.

Selon un autre exemple illustré à la figure 10, l'ERS expose à la lumière simultanément des lignes symétriques d'éléments photosensibles de deux moitiés 10 et 11 du capteur.

Lorsque le balayage des éléments photosensibles est effectué non seulement d'une ligne à l'autre, mais également à l'intérieur de chacune des lignes, on peut par exemple prévoir un balayage des lignes dans un certain sens pour la moitié 10 du capteur et dans un sens opposé pour l'autre moitié 11 du capteur, comme illustré par les flèches apparaissant sur la figure 10.

Ainsi, deux points 12 et 13 du capteur, symétriques par rapport à un centre du capteur, seront exposés simultanément à la lumière par l'ERS. Ceci est avantageux dans la mesure où la plupart des systèmes optiques sont symétriques autour de l'axe optique, si bien que certains défauts, tels que la courbure de champ, peuvent avoir la même valeur pour des éléments photosensibles symétriques par rapport au centre du capteur (lequel est le plus souvent sur l'axe optique).

Dans un tel cas, la position relative du système optique et du capteur déterminée par le système autofocus en synchronisation avec l'ERS est donc valable à la fois pour les éléments photosensibles 12 et 13. Elle permet de compenser simultanément la courbure de champ identique en ces deux points. Le nombre de déplacements assurés par le système autofocus est ainsi réduit, sans dégradation de la qualité des images capturées.

Selon un autre exemple encore, le balayage des éléments photosensibles est effectué en spirale ou en escargot. Ainsi, l'ERS pourrait exposer à la lumière les éléments photosensibles du capteur en partant des bords de ce dernier, puis en se rapprochant progressivement de ceux du centre, ou bien dans le sens inverse.

Supposons que l'ERS expose les éléments photosensibles du capteur pendant un temps d'exposition fixe (comme c'est le cas sur la figure 1 par exemple). Plus ce temps d'exposition est long, plus la proportion du capteur exposée à la lumière à un instant donné est grande. Il en résulte qu'une adaptation de la focalisation de la lumière vers le capteur et/ou de l'exposition à la lumière pour cette partie du capteur est d'autant plus imprécise, car les variations de la courbure de champ, de la distance objet et/ou de l'exposition y sont potentiellement nombreuses.

Ceci pousserait à réduire au maximum le temps d'exposition de chaque élément photosensible du capteur. Cependant, un temps d'exposition trop faible conduit à une acquisition de signal potentiellement trop faible, ce qui peut provoquer une dégradation de la qualité de l'image capturée.

Soit te un temps d'exposition donné pour lequel on estime que le signal acquis permet une qualité d'images suffisante, le problème mentionné ci-dessus peut avantageusement être résolu en effectuant une succession d'acquisitions d'images avec un temps d'exposition inférieur à te, puis en accumulant les différentes images acquises.

L'ERS peut par exemple être réglé pour exposer à la lumière, un nombre N de fois les éléments photosensibles du capteur pendant un temps réduit par exemple à te/N, de façon à obtenir N images correspondant chacune une fraction du temps d'exposition à la lumière te.

En référence à la figure 11, si le temps d'exposition te conduit l'ERS à exposer les éléments photosensibles du capteur par groupes 14 de trois lignes, on peut alors par exemple modifier l'ERS pour qu'il expose successivement chaque ligne 15 d'éléments photosensibles (ce qui correspond à N=3).

L'adaptation de la focalisation de la lumière vers le capteur et/ou de l'exposition à la lumière selon l'invention peut ainsi être réalisée pour chaque ligne 15 d'éléments photosensibles individuellement. Une telle adaptation, qui s'applique à une partie du capteur trois fois plus petite que dans le cas nominal, conduit à une meilleure correction des défauts de focalisation et/ou d'amélioration de l'exposition par rapport au cas nominal.

Une première image est ainsi obtenue avec une qualité améliorée à l'issue du premier balayage complet du capteur, ligne par ligne, par l'ERS.

Cette opération est répétée encore deux fois, de manière à obtenir en tout trois images correspondant à trois balayages complets du capteur, ligne par ligne, par l'ERS, avec un temps d'exposition de te/3 pour chaque élément photosensible.

Ces trois images peuvent enfin être accumulées de manière à obtenir une quantité de signal égale à la somme des quantités de signal de chacune des trois images. L'image unique résultant de cette combinaison est comparable, en quantité de signal, à une image correspondant au temps d'exposition te, mais sa qualité est supérieure car elle provient d'images corrigées finement vis-à-vis des défauts de focalisation et/ou de problèmes d'exposition.

Comme indiqué plus haut, l'invention peut s'appliquer à la capture d'images fixes ou animées.

Dans le cas d'un fonctionnement en mode vidéo, pour la capture d'images animées, on notera que l'exposition d'une image n+1 peut commencer avant la fin de l'exposition d'une image n précédente. Ceci ne pose pas vraiment de problème lorsque le temps d'exposition est faible, car le recouvrement entre les expositions des images successives est alors limité. Si le temps d'exposition est très élevé, on veillera à optimiser l'adaptation de la focalisation de la lumière vers le capteur et/ou l'exposition à la lumière pour tenir compte du recouvrement entre les expositions des images successives.

Les moyens pour adapter la focalisation de la lumière vers le capteur et/ou l'exposition à la lumière en synchronisation avec l'ERS peuvent être incorporés à un système de capture d'images classique, pour lequel d'autres mesures sont déjà prévues pour améliorer la qualité des images acquises. Dans ce cas, on augmente encore la qualité des images acquises, par exemple par compensation des défauts de focalisation et/ou par amélioration de l'exposition des éléments photosensibles du capteur.

En alternative, le système de capture d'images mettant en oeuvre l'invention peut comprendre un système optique présentant une quantité maîtrisée de défauts de focalisation et/ou il peut présenter une quantité maîtrisée d'erreurs dans la réponse des éléments photosensibles du capteur à une exposition donnée (e.g. du fait du phénomène de vignettage ou autre).

Dans ce cas, lesdites quantités maîtrisées sont avantageusement choisies de manière à pouvoir être compensées par l'action des moyens pour adapter la focalisation de la lumière vers le capteur et/ou l'exposition à la lumière. On peut ainsi obtenir des images acquises de qualité acceptable à partir d'un système de capture d'images de qualité limitée et/ou de faible coût.

Au-delà de ce qui a été décrit plus haut, l'invention peut consister à tirer profit du fonctionnement de l'obturateur à balayage électronique ERS pour améliorer la qualité des images acquises. Cette amélioration peut résulter d'une adaptation de la focalisation de la lumière vers le capteur, de l'exposition à la lumière ou encore d'autres phénomènes susceptibles de conduire à un gain dans l'acquisition d'images.

## Revendications

1. Système de capture d'images comprenant :
- un capteur (C) incluant une pluralité d'éléments photosensibles,
- un système optique (L) pour focaliser la lumière vers le capteur, et
- un obturateur à balayage électronique (ERS) agencé pour exposer à la lumière les éléments photosensibles à des instants dépendant de leurs positions respectives au sein du capteur,
le système de capture d'images comprenant en outre
- des moyens d'adaptation, synchronisés avec l'obturateur à balayage électronique (ERS), pour adapter, à chacun d'au moins deux instants donnés distincts au cours d'une capture d'image, la focalisation de la lumière vers le capteur et/ou l'exposition à la lumière de manière à améliorer la qualité de l'image acquise par la partie au moins des éléments photosensibles exposés à la lumière à cet instant par l'obturateur à balayage électronique (ERS).

2. Système de capture d'images selon la revendication 1, dans lequel lesdits moyens d'adaptation
comprennent un système (AF), notamment autofocus, agencé pour assurer un déplacement relatif entre le système optique (L) et le capteur, et synchronisé avec l'obturateur à balayage électronique (ERS) de manière à adapter la focalisation de la lumière vers le capteur pour ladite partie des éléments photosensibles exposés à la lumière à cet instant.

3. Système de capture d'images selon la revendication 1 ou 2, dans lequel lesdits moyens comprennent des moyens de changement d'une forme et/ou de propriétés du système optique et/ou du capteur et/ou du système de capture d'image de manière à adapter la focalisation de la lumière vers le capteur pour ladite partie des éléments photosensibles exposés à la lumière à cet instant.

4. Système de capture d'images selon la revendication 2 ou 3, dans lequel l'adaptation,
tient compte d'une courbure de champ introduite par le système optique (L) au niveau de ladite partie au moins des éléments photosensibles exposés à la lumière à cet instant.

5. Système de capture d'images selon l'une quelconque des revendications 2 à 4, dans lequel l'adaptation, tient compte d'une estimation de distance objet (d) relative à une partie d'une scène (O) à laquelle est exposée ladite partie au moins des éléments photosensibles exposés à la lumière à cet instant.

6. Système de capture d'images selon "une quelconque des revendications 2 à 5, dans lequel le capteur (C) présente une courbure sensiblement selon une première direction (X) et dans lequel l'adaptation, tient compte d'une composante, selon une deuxième direction (Y) perpendiculaire à la première direction, d'au moins un défaut de focalisation au niveau de ladite partie au moins des éléments photosensibles exposés à la lumière à cet instant.

7. Système de capture d'images selon l'une quelconque des revendications précédentes, dans lequel lesdits moyens d'adaptation sont synchronisés avec l'obturateur à balayage électronique (ERS) de manière à obtenir, lors d'une pré-capture d'une première image, des focalisations respectives de la lumière vers le capteur pour différents groupes d'éléments photosensibles du capteur exposés à la lumière à ces instants, le système de capture d'images comprenant en outre un module d'analyse pour déterminer un desdits groupes pour lequel la netteté de ladite première image satisfait un critère de qualité, lesdits moyens d'adaptation étant en outre agencés pour régler, lors d'une capture d'une seconde image, la focalisation de la lumière vers le capteur en fonction de la focalisation obtenue pour le groupe déterminé par le module d'analyse.

8. Système de capture d'images selon l'une quelconque des revendications précédentes, dans lequel lesdits moyens d'adaptation comprennent des moyens (E) pour sélectionner un facteur de gain (g(i,j)) et/ou un temps d'exposition (te(i,j)) adapté pour ladite partie des éléments photosensibles exposés à la lumière à cet instant en fonction d'une exposition préalablement estimée de ladite partie au moins des éléments photosensibles exposés à la lumière à cet instant.

9. Système de capture d'images selon l'une quelconque des revendications précédentes, comprenant un module d'éclairage pour éclairer une scène à capturer, et dans lequel lesdits moyens d'adaptation comprennent des moyens pour régler, à cet instant, une intensité lumineuse du module d'éclairage en fonction d'une exposition préalablement estimée de ladite partie au moins des éléments photosensibles exposés à la lumière à cet instant.

10. Système de capture d'images selon l'une quelconque des revendications précédentes, dans lequel lesdits moyens d'adaptation comprennent des moyens pour régler l'ouverture du système optique (L) à cet instant, de manière à adapter, la focalisation de la lumière vers le capteur et/ou l'exposition à la lumière pour ladite partie des éléments photosensibles exposés à la lumière à cet instant.

11. Système de capture d'images selon l'une quelconque des revendications précédentes, dans lequel lesdits moyens d'adaptation comprennent des moyens pour régler une focale du système optique (L) à cet instant, de manière à adapter la focalisation de la lumière vers le capteur et/ou l'exposition à la lumière pour ladite partie des éléments photosensibles exposés à la lumière à cet instant.

12. Système de capture d'images selon l'une quelconque des revendications précédentes, comprenant un premier et un deuxième modules d'éclairage pour éclairer une scéne à capturer, dans lequel lesdits moyens d'adaptation comprennent des moyens pour faire varier une intensité lumineuse du premier module d'éclairage en synchronisation avec l'obturateur à balayage électronique (ERS) de manière à obtenir des expositions à la lumière respectives pour différents groupes d'éléments photosensibles du capteur exposés à la lumière à ces instants, le système de capture d'images comprenant en outre un module d'analyse pour déterminer un desdits groupes dont l'exposition satisfait un critère de qualité et des moyens pour régler une intensité lumineuse du deuxième module d'éclairage en fonction de l'exposition obtenue pour le groupe déterminé par le module d'analyse.

13. Système de capture d'images selon l'une quelconque des revendications précédentes, dans lequel l'obturateur à balayage électronique (ERS) est agencé pour exposer à la lumière, à partir d'instants successifs, des lignes d'éléments photosensibles prises selon la plus petite dimension (7) du capteur (C).

14. Système de capture d'images selon l'une quelconque des revendications précédentes, dans lequel l'obturateur à balayage électronique (ERS) est agencé pour exposer à la lumière simultanément des lignes symétriques d'éléments photosensibles de deux moitiés (10,11) du capteur (C).

15. Système de capture d'images selon l'une quelconque des revendications précédentes, dans lequel, pour obtenir une image correspondant à un temps donné d'exposition à la lumière des éléments photosensibles du capteur, l'obturateur à balayage électronique (ERS) est agencé pour exposer à la lumière, un nombre N de fois, les éléments photosensibles pendant une fraction du temps donné d'exposition à la lumière de façon à réduire le nombre d'éléments photosensibles exposés à un instant donné, et de façon à obtenir N images correspondant chacune à une fraction du temps donné d'exposition à la lumière, le système de capture d'images comprenant en outre des moyens pour accumuler les N images en une image unique, la focalisation de la lumière vers le capteur et/ou l'exposition à la lumière étant adaptée au nombre réduit d'éléments photosensibles exposés à la lumière pendant ladite fraction du temps donné d'exposition.

16. Système de capture d'images selon l'une quelconque des revendications précédentes, dans lequel le système optique présente une quantité maîtrisée de défauts de focalisation et/ou le système de capture d'images présente une quantité maîtrisée d'erreurs dans la réponse des éléments photosensibles du capteur (C) à une exposition donnée, lesdites quantités maîtrisées étant choisies de manière à pouvoir être compensées par l'action des moyens d'adaptation.

17. Utilisation, pour améliorer la qualité des images acquises, d'un système de capture d'images selon l'une quelconque des revendications précédents, comprenant un capteur (C) incluant une pluralité d'éléments photosensibles, un système optique (L) pour focaliser la lumière vers le capteur et un obturateur à balayage électronique (ERS) agencé pour exposer à la lumière les éléments photosensibles à des instants dépendant de leurs positions respectives au sein du capteur, dans laquelle on adapte, à chacun d'au moins deux instants donnés distincts au cours d'une capture d'image, la focalisation de la lumière vers le capteur et/ou l'exposition à la lumière de maniére à améliorer la qualité de l'image acquise par la partie au moins des éléments photosensibles exposés à la lumière à cet instant.

## Claims

1. System for capturing images comprising:
a sensor (C) including a plurality of photosensitive elements,
an optical system (L) for focusing light towards the sensor, and
an electronic rolling shutter (ERS) arranged in order to expose the photosensitive elements to light at moments that depend on the relative positions thereof inside the sensor,
the system for capturing images further comprising
adaptation means, synchronized with the electronic rolling shutter (ERS), for adapting, at each of at least two distinct given moments during an image capture, the focusing of light towards the sensor and/or the exposure to light so as to improve the quality of the image acquired by the part at least of the photosensitive elements exposed to light at this moment by the electronic rolling shutter (ERS).

2. System for capturing images according to claim 1, wherein said adaptation means comprise a system (AF), particularly an autofocus system, arranged in order to provide a relative displacement between the optical system (L) and the sensor, and synchronized with the electronic rolling shutter (ERS) so as to adapt the focusing of light towards the sensor for said part of the photosensitive elements exposed to light at said moment.

3. System for capturing images according to claim 1 or 2, wherein said adaptation means comprise means of changing a form and/or properties of the optical system and/or of the sensor and/or of the system for capturing images so as to adapt the focusing of light towards the sensor for said part of the photosensitive elements exposed to light at said moment.

4. System for capturing images according to claim 2 or 3, wherein the adaptation takes account of a field curvature introduced by the optical system (L) at the level of said at least part of the photosensitive elements exposed to light at said moment.

5. System for capturing images according to any one of claims 2 to 4, wherein the adaptation takes account of an estimation of an object distance (d) relative to a part of a scene (O) to which is exposed at least said part of the photosensitive elements exposed to the light at said moment.

6. System for capturing images according to any one of claims 2 to 5, wherein the sensor (C) has a curvature substantially in a first direction (X) and wherein the adaptation takes account of a component, in a second direction (Y) perpendicular to the first direction, of at least one focusing defect at the level of said at least part of the photosensitive elements exposed to light at said moment.

7. System for capturing images according to any one of the preceding claims, wherein said adaptation means are synchronized with the electronic rolling shutter (ERS) so as to obtain, during a pre-capture of a first image, respective focusings of the light towards the sensor for different groups of photosensitive elements of the sensor exposed to light at these moments, the system for capturing images further comprising an analysis module for determining one of said groups for which sharpness of said first image satisfies a quality criterion, said adaptation means being further arranged in order to adjust, during a capture of a second image, the focusing of light towards the sensor in relation to the focusing obtained for the group determined by the analysis module.

8. System for capturing images according to any one of the preceding claims, wherein said adaptation means comprise means (E) for selecting a gain factor (g(i,j)) and/or an exposure time (te(i,j)) adapted for said part of the photosensitive elements exposed to light at said moment as a function of a previously-estimated exposure of said at least part of the photosensitive elements exposed to light at said moment.

9. System for capturing images according to any one of the preceding claims, comprising a lighting module in order to light a scene to be captured, and wherein said adaptation means comprise means for adjusting, at said moment, a light intensity of the lighting module as a function of a previously-estimated exposure of said at least part of the photosensitive elements exposed to light at said moment.

10. System for capturing images according to any one of the preceding claims, wherein said adaptation means comprise means for adjusting the aperture of the optical system (L) at said moment, so as to adapt the focusing of light towards the sensor and/or the exposure to light for said part of the photosensitive elements exposed to light at said moment.

11. System for capturing images according to any one of the preceding claims, wherein said adaptation means comprise means for adjusting a focal length of the optical system (L) at said moment, so as to adapt the focusing of light towards the sensor and/or the exposure to light for said part of the photosensitive elements exposed to light at said moment.

12. System for capturing images according to any one of the preceding claims, comprising a first and a second lighting modules in order to light a scene to be captured, wherein said adaptation means comprise means for varying a light intensity of the first lighting module synchronized with the electronic rolling shutter (ERS) so as to obtain respective exposures to light for different groups of photosensitive elements of the sensor exposed to light at said moments, the system for capturing images further comprising an analysis module for determining one of said groups the exposure of which satisfies a quality criterion and means for adjusting a light intensity of the second lighting module in relation to the exposure obtained for the group determined by the analysis module.

13. System for capturing images according to any one of the preceding claims, wherein the electronic rolling shutter (ERS) is arranged in order to expose to light, starting from successive moments, lines of photosensitive elements taken following the smallest dimension (7) of the sensor (C).

14. System for capturing images according to any one of the preceding claims, wherein the electronic rolling shutter (ERS) is arranged in order to simultaneously expose to light symmetrical lines of photosensitive elements of two halves (10,11) of the sensor (C).

15. System for capturing images according to any one of the preceding claims, wherein, in order to obtain an image corresponding to a given exposure to light time of the photosensitive elements of the sensor, the electronic rolling shutter (ERS) is arranged in order to expose the photosensitive elements to light, N number of times, for a fraction of the given time for exposure to light so as to reduce the number of photosensitive elements exposed at a given moment, and so as to obtain N images each corresponding to a fraction of the given exposure to light time, the system for capturing images comprising further means for accumulating the N images in a single image, the focusing of light towards the sensor and/or the exposure to light being adapted to the reduced number of photosensitive elements exposed to light during said fraction of the given exposure time.

16. System for capturing images according to any one of the preceding claims, wherein the optical system has a controlled quantity of focusing defects and/or the system for capturing images has a controlled quantity of errors in the response of the photosensitive elements of the sensor (C) to a given exposure, said controlled quantities being chosen in such a way as to be capable of being compensated for by the action of the adaptation means.

17. Use, for improving quality of acquired images, of a system for capturing images according to any one of the preceding claims, and comprising a sensor (C) including a plurality of photosensitive elements, an optical system (L) for focusing the light towards the sensor and an electronic rolling shutter (ERS) arranged in order to expose the photosensitive elements to the light at moments that depend on the relative positions thereof inside the sensor, wherein, at each of at least two distinct given moments during an image capture, the focusing of light towards the sensor and/or the exposure to light so as to improve quality of the image acquired by the part at least of the photosensitive elements exposed to light at this moment.

## Patentansprüche

1. System zum Erfassen von Bildern, umfassend:
- einen Sensor (C), der eine Mehrzahl von lichtempfindlichen Elementen einschließt,
- ein optisches System (L) zum Fokussieren des Lichts auf dem Sensor und
- einen elektronischen Abtastverschluss (ERS), der eingerichtet ist, die lichtempfindlichen Elemente dem Licht in Augenblicken auszusetzen, die von ihren jeweiligen Positionen im Inneren des Sensors abhängen,
wobei das System zum Erfassen von Bildern weiterhin umfasst:
- Anpassmittel, die mit dem elektronischen Abtastverschluss (ERS) synchronisiert sind, zum Anpassen des Fokussierens des Lichts auf den Sensor und/oder der Aussetzung mit dem Licht, bei jedem von wenigstens zwei gegebenen verschiedenen Augenblicken während eines Erfassens des Bildes, um die Qualität des Bildes zu verbessern, das durch wenigstens den Teil der lichtempfindlichen Elemente erlangt wurde, die in diesem Augenblick durch den elektronischen Abtastverschluss (ERS) dem Licht ausgesetzt sind.

2. System zum Erfassen von Bildern nach Anspruch 1, wobei die Anpassmittel ein System (AF) umfassen, insbesondere einen Autofokus, das eingerichtet ist zur Sicherstellung einer Relativverlagerung zwischen dem optischen System (L) und dem Sensor, und das mit dem elektronischen Abtastverschluss (ERS) synchronisiert ist, um die Fokussierung des Lichts auf den Sensor für den Teil der lichtempfindlichen Elemente, die in diesem Augenblick dem Licht ausgesetzt sind, anzupassen.

3. System zum Erfassen von Bildern nach Anspruch 1 oder 2, wobei die Mittel Mittel zum Ändern einer Form und/oder von Eigenschaften des optischen Systems und/oder des Sensors und/oder des Systems zum Erfassen des Bildes umfassen, um die Fokussierung des Lichts auf den Sensor für den Teil der lichtempfindlichen Elemente, die in diesem Augenblick dem Licht ausgesetzt sind, anzupassen.

4. System zum Erfassen von Bildern nach Anspruch 2 oder 3, wobei die Anpassung eine Feldkrümmung berücksichtigt, die durch das optische System (L) eingeführt ist, auf dem Niveau von wenigstens dem Teil der lichtempfindlichen Elemente, die in diesem Augenblick dem Licht ausgesetzt sind.

5. System zum Erfassen von Bildern nach einem der Ansprüche 2 bis 4, wobei die Anpassung eine Schätzung eines Objektabstands (d) relativ zu einem Teil einer Szene (O) berücksichtigt, welcher wenigstens der Teil der lichtempfindlichen Elemente ausgesetzt ist, die in diesem Augenblick dem Licht ausgesetzt sind.

6. System zum Erfassen von Bildern nach einem der Ansprüche 2 bis 5, wobei der Sensor (C) eine Krümmung im Wesentlichen in einer ersten Richtung (X) aufweist, und wobei die Anpassung eine Komponente in einer zu der ersten Richtung orthogonalen zweiten Richtung (Y) eines Fokussierdefekts auf dem Niveau von wenigstens dem Teil der lichtempfindlichen Elemente, die dem Licht in diesem Augenblick ausgesetzt sind, berücksichtigt.

7. System zum Erfassen von Bildern nach einem der vorhergehenden Ansprüche, wobei die Anpassmittel mit dem elektronischen Abtastverschluss (ERS) synchronisiert sind, um während eines Vorerfassens eines ersten Bildes jeweilige Fokussierungen des Lichts auf den Sensor für verschiedene Gruppen von lichtempfindlichen Elementen des Sensors, die dem Licht in diesen Augenblicken ausgesetzt sind, zu erhalten, wobei das System zum Erfassen von Bildern ferner ein Analysemodul umfasst, um eine dieser Gruppen zu bestimmen, für die die Schärfe des ersten Bildes ein Qualitätskriterium erfüllt, wobei die Anpassmittel ferner eingerichtet sind, während eines Erfassens eines zweiten Bildes die Fokussierung des Lichts auf den Sensor in Funktion der für die von dem Analysemodul bestimmte Gruppe erhaltene Fokussierung einzustellen.

8. System zum Erfassen von Bildern nach einem der vorhergehenden Ansprüche, wobei die Anpassmittel Mittel (E) zum Auswählen eines Verstärkungsfaktors (g(i,j)) und/oder einer Aussetzungszeit (te(i,j)) umfassen, für den Teil der lichtempfindlichen Elemente, die dem Licht in diesem Augenblick ausgesetzt sind, in Funktion einer zuvor geschätzten Aussetzung wenigstens des Teils der lichtempfindlichen Elemente, die dem Licht in diesem Augenblick ausgesetzt sind.

9. System zum Erfassen von Bildern nach einem der vorhergehenden Ansprüche, umfassend ein Beleuchtungsmodul zum Beleuchten einer zu erfassenden Szene, und wobei die Anpassmittel Mittel zum Einstellen, in diesem Augenblick, einer Leuchtintensität des Beleuchtungsmoduls umfassen, in Funktion einer zuvor geschätzten Aussetzung wenigstens des Teils der lichtempfindlichen Elemente, die dem Licht in diesem Augenblick ausgesetzt sind.

10. System zum Erfassen von Bildern nach einem der vorhergehenden Ansprüche, wobei die Anpassmittel Mittel zum Einstellen der Öffnung des optischen Systems (L) in diesem Augenblick umfassen, um die Fokussierung des Lichts auf den Sensor und/oder die Aussetzung mit dem Licht für den Teil der lichtempfindlichen Elemente, die dem Licht in diesem Augenblick ausgesetzt sind, anzupassen.

11. System zum Erfassen von Bildern nach einem der vorhergehenden Ansprüche, wobei die Anpassmittel Mittel zum Einstellen einer Brennweite des optischen Systems (L) in diesem Augenblick umfassen, um die Fokussierung des Lichts auf den Sensor und/oder die Aussetzung mit dem Licht für den Teil der lichtempfindlichen Elemente, die dem Licht in diesem Augenblick ausgesetzt sind, anzupassen.

12. System zum Erfassen von Bildern nach einem der vorhergehenden Ansprüche, umfassend ein erstes und ein zweites Beleuchtungsmodul zum Beleuchten einer zu erfassenden Szene, wobei die Anpassmittel Mittel umfassen zum Variieren einer Leuchtintensität des ersten Beleuchtungsmoduls in Synchronisation mit dem elektronischen Abtastverschluss (ERS), um für verschiedene Gruppen der lichtempfindlichen Elemente des Sensors, die dem Licht in diesem Augenblick ausgesetzt sind, jeweilige Aussetzungen mit dem Licht zu erhalten, wobei das System zum Erfassen von Bildern ferner ein Analysemodul zum Bestimmen einer der Gruppen, bei der die Aussetzung ein Qualitätsmerkmal erfüllt, und Mittel zum Einstellen einer Lichtintensität des zweiten Beleuchtungsmoduls in Funktion der Aussetzung, die für die von dem Analysemodul bestimmten Gruppe erhallten wurde, umfasst.

13. System zum Erfassen von Bildern nach einem der vorhergehenden Ansprüche, wobei der elektronische Abtastverschluss (ERS) eingerichtet ist, von aufeinanderfolgenden Augenblicken an, Reihen der lichtempfindlichen Elemente, die entlang der kleinsten Dimension (7) des Sensors (C) genommen sind, dem Licht auszusetzen.

14. System zum Erfassen von Bildern nach einem der vorhergehenden Ansprüche, wobei der elektronische Abtastverschluss (ERS) eingerichtet ist, simultan symmetrische Reihen von lichtempfindlichen Elementen von zwei Hälften (10, 11) des Sensors (C) dem Licht auszusetzen.

15. System zum Erfassen von Bildern nach einem der vorhergehenden Ansprüche, wobei, um ein Bild zu erhalten, das einer Zeit entspricht, die durch Aussetzen der lichtempfindlichen Elemente des Sensors mit dem Licht bestimmt ist, der elektronische Abtastverschluss (ERS) eingerichtet ist, die lichtempfindlichen Elemente, einer Anzahl N an Malen, dem Licht auszusetzen, während eines Bruchteils der Zeit, die durch das Aussetzen mit dem Licht bestimmt ist, um so die Anzahl der lichtempfindlichen Elemente zu reduzieren, die in einem gegebenen Augenblick ausgesetzt sind, und um so N Bilder zu erhalten, jedes entsprechend einem Bruchteil der Zeit, die durch das Aussetzen mit dem Licht bestimmt ist, wobei das System zum Erfassen von Bildern ferner Mittel zum Sammeln der N Bilder in einem einzigen Bild umfasst, wobei die Fokussierung des Lichts auf den Sensor und/oder das Aussetzen mit dem Licht an die reduzierte Anzahl der lichtempfindlichen Elemente, die während des Bruchteils der Zeit, die durch die Aussetzung bestimmt ist, dem Licht ausgesetzt sind, angepasst sind.

16. System zum Erfassen von Bildern nach einem der vorhergehenden Ansprüche, wobei das optische System eine kontrollierte Anzahl an Fokussierungsdefekten aufweist und/oder das System zum Erfassen von Bildern eine kontrollierte Anzahl von Fehlern in der Antwort der lichtempfindlichen Elemente des Sensors (C) auf eine gegebene Aussetzung aufweist, wobei die kontrollierten Anzahlen so gewählt sind, um durch die Aktion der Anpassmittel kompensiert werden zu können.

17. Verwendung, zum Verbessern der Qualität von erlangten Bildern, eines Systems zum Erfassen von Bildern nach einem der vorhergehenden Ansprüche, umfassend einen Sensor (C), der eine Mehrzahl von lichtempfindlichen Elementen einschließt, ein optisches System (L) zum Fokussieren des Lichts auf den Sensor und einen elektronischen Abtastverschluss (ERS), der eingerichtet ist, die lichtempfindlichen Elemente dem Licht in Augenblicken auszusetzen, die von ihrer jeweiligen Positionen im Innern des Sensors abhängen, wobei bei jedem von wenigstens zwei gegebenen verschiedenen Augenblicken während eines Erfassens eines Bildes die Fokussierung des Lichts auf den Sensor und/oder die Aussetzung mit dem Licht angepasst wird, um die Qualität des Bildes zu verbessern, das von wenigstens dem Teil der lichtempfindlichen Elemente erlangt wurde, die in diesem Augenblick dem Licht ausgesetzt sind.
